# EUROPÄISCHE PATENTSCHRIFT

(11) **EP 2 119 124 B1**
(45) Veröffentlichungstag und Bekanntmachung des Hinweises auf die Patenterteilung: **07.09.2011**
(21) Anmeldenummer: 08708195.6
(22) Anmeldetag: 25.01.2008
(51) Int. Cl.: H04L 12/40, G05B 19/00, H04Q 9/00

(54) **VERFAHREN ZUM BETRIEB EINER NETZWERKKOMPONENTE IN EINEM AUTOMATISIERUNGSSYSTEM, AUTOMATISIERUNGSSYSTEM MIT EINER NACH DEM VERFAHREN BETRIEBBAREN NETZWERKKOMPONENTE, VERFAHREN ZUR DATENÜBERMITTLUNG IN EINEM AUTOMATISIERUNGSSYSTEM MIT KOMMUNIKATIONSTEILNEHMERN VON DENEN ZUMINDEST EINZELNE NACH DEM VERFAHREN ZUM BETRIEB EINER NETZWERKKOMPONENTE ALS NETZWERKKOMPONENTE BETRIEBEN SIND SOWIE KORRESPONDIERENDES COMPUTERPROGRAMM UND COMPUTERPROGRAMMPRODUKT**
METHOD FOR THE OPERATION OF A NETWORK COMPONENT IN AN AUTOMATION SYSTEM, AUTOMATION SYSTEM COMPRISING A NETWORK COMPONENT WHICH IS CAPABLE OF BEING OPERATED IN ACCORDANCE WITH THE METHOD, METHOD FOR TRANSMITTING DATA IN AN AUTOMATION SYSTEM HAVING COMMUNICATION DEVICES AMONG WHICH SOME OPERATE AS NETWORK COMPONENTS ACCORDING TO THE METHOD FOR THE OPERATION OF A NETWORK COMPONENT, AND CORRESPONDING COMPUTER PROGRAM AND COMPUTER PROGRAM PRODUCT
PROCÉDÉ DE FONCTIONNEMENT D'UN COMPOSANT DE RÉSEAU DANS UN SYSTÈME D'AUTOMATISATION, SYSTÈME D'AUTOMATISATION POURVU D'UN COMPOSANT DE RÉSEAU POUVANT FONCTIONNER SUIVANT LE PROCÉDÉ, PROCÉDÉ DE TRANSMISSION DE DONNÉES DANS UN SYSTÈME D'AUTOMATISATION AYANT DES APPAREILS DE COMMUNICATION DONT AU MOINS CERTAINS FONCTIONNENT EN TANT QUE COMPOSANTS DE RÉSEAU SELON LE PROCÉDÉ DE FONCTIONNEMENT D'UN COMPOSANT DE RÉSEAU, AINSI QUE PROGRAMME INFORMATIQUE ET PRODUIT PROGRAMME INFORMATIQUE CORRESPONDANTS

(30) Priorität: 29.01.2007 DE 102007004306
(43) Veröffentlichungstag der Anmeldung: 18.11.2009
(73) Patentinhaber: Siemens Aktiengesellschaft, 80333 München (DE)
(72) Erfinder: WEBER, Karl, 90518 Altdorf (DE)
(86) Internationale Anmeldenummer: PCT/EP2008/050859
(87) Internationale Veröffentlichungsnummer: WO 2008/092805

(56) Entgegenhaltungen:
- EP-A- 1 184 754
- US-A1- 2002 059 477
- US-A1- 2007 018 783

## Beschreibung

Die Erfindung betrifft zunächst eine Netzwerkkomponente in einem Automatisierungssystem, umfassend zumindest einen ersten, zweiten und dritten Ein- und Ausgangsport, im Folgenden kurz als Port bezeichnet. Bei der vorbezeichneten Netzwerkkomponente handelt es sich insbesondere um einen so genannten Switch, also eine Netzwerkkomponente zur Verbindung mehrerer Netzsegmente in einem lokalen Netz oder zur Verbindung mehrerer in dem lokalen Netz zusammengefasster Kommunikationsteilnehmer.

Derartige Netzwerkkomponenten sind allgemein bekannt. So genannte Switches oder Bridges analysieren den Datenverkehr im Netzwerk und treffen im Anschluss an die Analyse logische Entscheidungen im Hinblick auf die Weiterleitung eingehender Datagramme über entweder den ersten, zweiten oder dritten Port. Dazu verwalten bekannte Netzwerkkomponenten eine so genannte forwarding database (FDB), in der neben einer Adresse, normalerweise einer so genannten MAC-Adresse, unter der die Netzwerkkomponente von einem anderen Kommunikationsteilnehmer ein Frame oder ein oder mehrere davon umfasste Datagramme - zusammenfassend im Folgenden als Telegramm bezeichnet - empfängt, auch der physikalische Port, also der erste, zweite, dritte, etc. Port, unter dem dieses empfangen wurde, gespeichert wird. Wenn die Netzwerkkomponente später ein Telegramm empfängt, das an eine Adresse gerichtet ist, die einem Kommunikationsteilnehmer zugehörig ist, von dem bereits ein Telegramm empfangen wurde, kann durch Überprüfung der FDB ermittelt werden, über welchen der Ports der Netzwerkkomponente dieser Kommunikationsteilnehmer erreichbar ist und das Telegramm entsprechend gezielt über diesen Port weitergeleitet werden. Ist eine Zieladresse noch nicht bekannt, leiten bekannte Netzwerkkomponenten das betreffende Telegramm an alle aktiven Ports.

Nachteilig bei diesen bekannten Netzwerkkomponenten sind einerseits der Ressourcenbedarf zum Vorhalten der FDB und andererseits die ungünstigen Verhältnisse, die sich ergeben, wenn eine Zieladresse noch nicht bekannt ist und Telegramme entsprechend unnötig in eine Mehrzahl von Segmenten des Netzwerks gegeben werden, so dass unnötige Bandbreite belegt wird und diese während einer betroffenen Zeitspanne nicht anderweitig zur Verfügung steht. Außerdem entfällt eine oftmals zeitaufwendige Suche in einer FDB oder dergleichen, wobei aufgrund des unvermeidlichen Umfangs solcher Datenbasen auch mit vergleichsweise effizienten, so genannten hash-Suchen eine verzögerte Weiterleitung nicht vermeidbar ist. Zudem fällte eine sich aufgrund solcher Suchen ergebende Verzögerung bei jeder weiterleitenden Station an, so dass sich die Verzögerungszeit schnell zu merklichen Größenordnungen addiert.

Aus der US 2002/0059477 A1 ist ein Verfahren zur Konfiguration eines Leitsystems einer elektrischen Schaltanlage bekannt, bei dem die Schaltanlage ein Primärgerät und eine Mehrzahl von Leitgeräten umfasst, die in an sich bekannter Art durch Busse verbunden sind, derart, dass das Primärgerät an einen übergeordneten Bus angeschlossen ist und die Leitgeräte intern einen Prozessbus aufweisen. Aus der EP 1 184 754 A2 ist ein System zur Maschinensteuerung bekannt, wobei das System in unterschiedliche Hierarchien aufgeteilt ist und in jeder Hierarchieebene zwischen den dortigen Systembestandteilen Kommunikationsbeziehungen bestehen. Keines der vorgenannten Dokumente befasst sich mit Netzwerkkomponenten wie vorstehend definiert, sondern nur mit solchen Kommunikationsteilnehmern, wie sie in einem System als tatsächliche Konsumenten oder Produzenten von zu versendenden Telegrammen fungieren, während die von der Erfindung betroffenen Netzwerkkomponenten eher als Schnittstelle zwischen solchen Einheiten aufgefasst werden können (*switch, bridge*) und im Einzelfall zwar von derartigen Einheiten umfasst sein können, aber z. B. niemals selbst Daten produzieren, sondern solche Daten nur von anderen Einheiten oder Netzwerkkomponenten erhalten und entsprechend einem von der Erfindung vorgeschlagenen Ansatz weiterleiten.

Eine Aufgabe eines ersten Aspekts der vorliegenden Erfindung besteht entsprechend darin, ein Verfahren zum Betrieb einer Netzwerkkomponente anzugeben, mit der die o.g. Nachteile soweit wie möglich vermieden oder zumindest hinsichtlich ihrer Auswirkungen reduziert werden.

Dies wird mit einem Verfahren, wie es in Anspruch 1 definiert ist, erreicht. Dazu ist bei einer Netzwerkkomponente zur Verwendung in einem Automatisierungssystem, die zumindest einen ersten, zweiten und dritten Ein- und Ausgangsport (Port) umfasst, insbesondere vorgesehen, dass über den ersten und zweiten Port eine Verbindung zu anderen Kommunikationsteilnehmern im Automatisierungssystem, insbesondere zu anderen Netzwerkkomponenten, innerhalb einer hierarchisch gleichen Linie einer

Netzwerktopologie des Automatisierungssystems besteht und dass über den dritten und ggf. weitere Ports eine Anbindung an andere Kommunikationsteilnehmer im Automatisierungssystem, insbesondere andere Netzwerkkomponenten, in einer hierarchisch untergeordneten Linie dieser Netzwerktopologie besteht, wobei ein Anschluss einer Netzwerkkomponente an einen dritten oder weiteren Port einer vorangehenden Netzwerkkomponente über deren ersten Port erfolgt. Die mindestens drei Ports einer Netzwerkkomponente werden also exklusiv einzelnen Hierarchieebenen innerhalb des Automatisierungssystems zugeordnet, wobei der Begriff Automatisierungssystem hier nicht nur eine Kollektion üblicher und an sich bekannter Automatisierungsgeräte, also z.B. Steuerungen, insbesondere speicherprogrammierbare Steuerungen, dezentrale Peripheriegeräte usw. umfasst, sondern auch die zwischen solchen Geräten, zusammenfassend als Kommunikationsteilnehmer bezeichnet, bestehenden Kommunikationsverbindungen, also das eigentliche Netzwerk.

Das Netzwerk wird als in Linien organisiert angesehen, wobei einem zentralen Kommunikationsteilnehmer, z.B. einer übergeordneten Station in Form eines Leitrechners oder dergleichen, eine erste Linie zugeordnet ist. Innerhalb einer Linie kann eine Mehrzahl von Kommunikationsteilnehmern vorgesehen sein, von denen zumindest einige als Netzwerkkomponenten der oben genannten Art ausgebildet sind oder von denen zumindest einige eine solche Funktionalität beinhalten. Der erste und zweite Port fungieren dabei je nach Richtung von über das Netzwerk zu transferierenden Telegrammen als Ein- oder Ausgang. Durch Verbindung der einzelnen Ports, also durch Verbindung des ersten Ports einer ersten Netzwerkkomponente, mit dem zweiten Port einer nachfolgenden, weiteren Netzwerkkomponente werden innerhalb der gleichen Linie die Kommunikationsteilnehmer, insbesondere Netzwerkkomponenten, hintereinander geschaltet. Alle Verbindungen, die sich durch Anschluss an den ersten oder zweiten Port der vorgenannten Netzwerkkomponenten ergeben, werden als einer hierarchisch gleichen Linie zugehörig betrachtet. Über den dritten und ggf. weitere Ports ist eine Anbindung an andere Kommunikationsteilnehmer im Automatisierungssystem, insbesondere andere Netzwerkkomponenten, möglich. Diese Kommunikationsteilnehmer oder Netzwerkkomponenten gehören nicht mehr der Linie an, der die Netzwerkkomponente zugehörig ist, über deren dritten Port der Anschluss hergestellt wird. Jeder auf diese Weise angeschlossene Kommunikationsteilnehmer wird als einer hierarchisch untergeordneten Linie zugehörig angesehen. Wenn der auf diese Weise angeschlossene Kommunikationsteilnehmer eine Netzwerkkomponente der eingangs genannten Art ist, kann durch Anschluss weiterer Kommunikationsteilnehmer, insbesondere Netzwerkkomponenten, an dessen zweiten Port die hierarchisch untergeordnete Linie zu einer tatsächlichen Linie, also einem Netzwerksegment mit mehr als zwei Kommunikationsteilnehmern, ausgebaut werden. Wenn der auf die oben genannte Weise angeschlossene Kommunikationsteilnehmer eine Netzwerkkomponente der eingangs genannten Art ist, kann durch Anschluss an dessen dritten Port eine nochmals hierarchisch untergeordnete Linie vorgesehen werden usw. Durch die dezidierte Verwendung der bei Netzwerkkomponenten an sich bekannten Ports einerseits für Verbindungen innerhalb einer hierarchisch gleichen Linie und andererseits für Verbindungen zu einer hierarchisch untergeordneten Linie ergibt sich eine eindeutige Struktur in dem Automatisierungssystem, die das zielgerichtete Weiterleiten von Telegrammen ermöglicht.

Insoweit betrifft die Erfindung auch ein Verfahren zum Betrieb einer Netzwerkkomponente der eingangs genannten Art und eine Aufgabe dieses Aspekts der Erfindung besteht darin, ein Verfahren für eine günstige Verwendung der eingangs vorgestellten und nachfolgend weiter beschriebenen Netzwerkkomponente anzugeben. Dazu ist vorgesehen, dass der Netzwerkkomponente ein Alias, also eine Bezeichnung nach Art einer Adresse, insbesondere ein Alias neben ihrer Netzwerkadresse, also z.B. einer IP-Adresse oder einer MAC-Adresse, zugeordnet ist oder wird, welche Aufschluss über eine hierarchische Position der Netzwerkkomponente in dem Automatisierungssystem gibt.

Dem eingangs erwähnten Leitrechner wird danach bevorzugt z.B. ein Alias zugeordnet, der dessen zentrale Position in dem Automatisierungssystem angibt, z.B. in Form einer Ziffer oder eines so genannten "Strings" mit dem Wert bzw. Inhalt "1". In dem Automatisierungssystem zwischen einzelnen Kommunikationsteilnehmern versandte Telegramme bezeichnen dann einen Zielkommunikationsteilnehmer zumindest auch anhand dessen Alias. Beim Empfang eines Telegramms durch eine Netzwerkkomponente wird auf dieser Basis ein eigener Alias mit einem von dem empfangenen Telegramm umfassten Alias eines Zielkommunikationsteilnehmers, im Folgenden kurz als Zielalias bezeichnet, verglichen. In Abhängigkeit vom Ergebnis des Vergleichs wird das Telegramm dann entweder über den ersten, den zweiten oder den dritten Port oder eventuelle weitere Ports weitergeleitet. D.h. der Vergleich von eigenem Alias und Zielalias ermöglicht die eindeutige Auswahl eines der Ports einer Netzwerkkomponente zur Weiterleitung des empfangenen Telegramms über genau den sich anhand des Vergleichs ergebenden Port.

In einer bevorzugten Ausführungsform des Verfahrens ist vorgesehen, dass das Telegramm über den ersten Port weitergeleitet wird, wenn ein die eigene Ebene der Netzwerkkomponente bezeichnender Bestandteil des eigenen Alias, im Folgenden kurz als relevanter Aliasabschnitt bezeichnet, und ein entsprechender Bestandteil des Zielalias, im Folgenden analog als relevanter Zielaliasabschnitt bezeichnet, in dieser Reihenfolge einer "kleiner gleich"-Relation genügen. Analog erfolgt eine Weiterleitung über den zweiten Port, wenn der relevante Aliasabschnitt und der relevante Zielaliasabschnitt einer "größer gleich"-Relation oder über den dritten Port wenn, wenn der relevante Aliasabschnitt und der relevante Zielaliasabschnitt einer "ist gleich"-Relation genügen.

Als Alias mehrerer einer hierarchisch gleichen Linie zugehöriger Netzwerkkomponenten kann sich in einem konkreten Automatisierungssystem z.B. "1", "2", "3", usw. oder "3.1.1", "3.1.2", "3.1.3", usw. ergeben. Der relevante Bestandteil des jeweiligen Alias ist derjenige Bestandteil, der sich auf die eigene Ebene der Netzwerkkomponente bezieht. Im ersten Fall, in dem jede Netzwerkkomponente auf der hierarchisch obersten Ebene zugeordnet ist, ist also der Alias selbst der relevante Bestandteil. Im zweiten Fall, bei dem jeweils ein Alias exemplarisch angegeben ist, wie er sich auf eine Netzwerkkomponente in einer "hierarchisch dritten Ebene" beziehen könnte, ist der relevante Bestandteil die diese dritte Ebene bezeichnende letzte Ziffer des Alias, also ebenfalls wieder "1", "2", "3", usw.

Wenn also eine der Netzwerkkomponenten, die der hierarchisch obersten Linie des Automatisierungssystems zugehörig sind, ein Telegramm empfängt, das für einen Kommunikationsteilnehmer mit dem Alias "3.1" bestimmt ist, wird dieses Telegramm von jeder Netzwerkkomponente weitergeleitet, solange dessen relevanter eigener Aliasabschnitt, also "1", "2" und der relevante Zielaliasabschnitt, also "3", in dieser Reihenfolge einer "kleiner gleich"-Relation, also hier "1≤3" und "2≤3", genügen.

Das Telegramm würde über den zweiten Port weitergeleitet, wenn der relevante eigene Aliasabschnitt und der relevante Zielaliasabschnitt in dieser Reihenfolge einer "größer gleich"-Relation genügen. Übertragen auf das vorstehend gewählte Beispiel würde also der zweite Port gewählt, wenn der durch den Alias "3.1" bezeichnete Kommunikationsteilnehmer nach Empfang des Telegramms antwortet und das Antworttelegramm für einen Kommunikationsteilnehmer bestimmt ist, der hierarchisch "vor" der Netzwerkkomponente mit dem Alias "3" liegt.

Der dritte Port wird zur Weiterleitung von Telegrammen verwendet, wenn der relevante eigene Aliasabschnitt und der relevante Zielaliasabschnitt einer "ist gleich"-Relation genügen. Im eingangs gewählten Beispiel war das Telegramm für den Kommunikationsteilnehmer mit dem Alias "3.1" bestimmt, so dass, sobald das Telegramm zu der durch den Alias "3" bezeichneten Netzwerkkomponente gelangt, hinsichtlich des relevanten eigenen Aliasabschnitts und des relevanten Zielaliasabschnitts des zu übertragenden Telegramms die "ist gleich"-Relation erfüllt ist, so dass zur Weiterleitung des Telegramms der dritte Port ausgewählt wird und damit das Telegramm beim Zielkommunikationsteilnehmer eintrifft.

Zur Auswahl eines Kommunikationspfades zum Zielkommunikationsteilnehmer sind dabei in den beteiligten Netzwerkkomponenten keinerlei Daten, insbesondere keine Daten nach Art einer im Stand der Technik bisher verwendeten FDB oder dergleichen, vorzuhalten, so dass die Netzwerkkomponenten in dieser Hinsicht entlastet sind. Darüber hinaus ist der Kommunikationspfad zum jeweiligen Zielkommunikationsteilnehmer jederzeit vollständig ermittelbar und zwar unabhängig davon, ob der adressierte Zielkommunikationsteilnehmer sich bereits bei benachbarten Kommunikationsteilnehmern, insbesondere Netzwerkkomponenten, identifiziert hat, wie dies zum Aufbau einer FDB erforderlich wäre. In dieser Hinsicht ist das Netzwerk, also das Automatisierungssystem, von unnötiger Kommunikation entlastet, die sich im Stand der Technik insbesondere dann ergibt, wenn ein Zielkommunikationsteilnehmer noch nicht bekannt ist, so dass die betreffende Netzwerkkomponente, um den Zielkommunikationsteilnehmer sicher zu erreichen, das eingegangene Telegramm an alle verfügbaren Ports weiterleiten muss.

Eine weitere vorteilhafte Ausgestaltung des Verfahrens besteht darin, dass ein über den ersten Port empfangenes Telegramm als Irrläufer zurückgewiesen wird, wenn der relevante eigene Aliasabschnitt und der relevante Zielaliasabschnitt in dieser Reihenfolge einer "kleiner gleich"-Relation genügen. Nach dem oben beschriebenen und nachfolgend noch weiter erläuterten Weiterleitungsschema kann ein Telegramm über den zweiten Port einer Netzwerkkomponenten nur dann weitergeleitet werden, wenn der relevante eigene Aliasabschnitt dieser Netzwerkkomponente und der relevante Zielaliasabschnitt des Telegramms in dieser Reihenfolge einer "größer gleich"-Relation genügen. Nachdem weiter in einer Linie der erste Port einer nachfolgenden Netzwerkkomponente direkt oder indirekt nur mit dem zweiten Port einer vorangehenden Netzwerkkomponente verbunden sein kann, muss jedes Telegramm, das über diesen ersten Port empfangen wird und bei dem der relevante eigene Aliasabschnitt und der relevante Zielaliasabschnitt in dieser Reihenfolge einer "kleiner gleich"-Relation genügen, ein Irrläufer sein. Analog wird auch ein über den zweiten Port empfangenes Telegramm als Irrläufer zurückgewiesen, wenn der relevante eigene Aliasabschnitt und der relevante Zielaliasabschnitt in dieser Reihenfolge einer "größer gleich"-Relation genügen.

Solche Irrläufer sollten nicht vorkommen, wenn das Automatisierungssystem ausschließlich mit Netzwerkkomponenten der hier beschriebenen Art oder mit Netzwerkkomponenten, die nach dem hier beschriebenen Verfahren arbeiten, bestückt ist. Allerdings ist eine Erkennung und Zurückweisung von Irrläufern auch in einem derartigen Automatisierungssystem vor dem Hintergrund sinnvoll, dass auf diese Weise eventuelle fehlerhafte Weiterleitungen identifiziert werden und nicht weiter unnötig Ressourcen in dem Automatisierungssystem belegen. Darüber hinaus lassen sich mit der genannten bevorzugten Ausführungsform in heterogenen Automatisierungssystemen, also Systemen, die auch Netzwerkkomponenten umfassen, die nicht die Eigenschaften der hier beschriebenen Netzwerkkomponenten haben oder nicht nach dem hier beschriebenen Verfahren arbeiten, unvermeidliche Irrläufer identifizieren und zurückweisen.

Damit betrifft die Erfindung auch insgesamt ein Automatisierungssystem, in dem solche Netzwerkkomponenten oder Netzwerkkomponenten, die nach einem solchen Verfahren arbeiten, vorhanden sind. Ein derartiges Automatisierungssystem mit einer Mehrzahl von Kommunikationsteilnehmern, von denen zumindest einige Netzwerkkomponenten der eingangs oder nachfolgend beschriebenen Art sind oder nach dem eingangs oder nachfolgend beschriebenen Verfahren betrieben oder betreibbar sind, löst dabei das Problem, ein Automatisierungssystem anzugeben, in dem eine effiziente Weiterleitung von Telegrammen in Richtung des Zielkommunikationsteilnehmers möglich ist, ohne dass dazu in den Netzwerkkomponenten eine Vielzahl von Daten bereitzuhalten ist und ohne dass Telegramme unnötig durch eine Netzwerkkomponente über eine Mehrzahl von Ports weitergeleitet werden.

Von dem Automatisierungssystem können dabei auch Netzwerkkomponenten umfasst sein, die nur zwei Ports aufweisen, also z.B. nur Ports für eine Weiterleitung von Telegrammen in der gleichen Linie oder nur Ports für einen Übergang von oder zu einer untergeordneten Linie. Solche Netzwerkkomponenten werden je nach lokaler Topologie des Automatisierungssystem anstelle der hier ansonsten beschriebenen Netzwerkkomponenten mit mindestens drei Ports vorgesehen.

Hinsichtlich einer weiteren Ausgestaltung eines solchen Automatisierungssystems ist vorteilhaft vorgesehen, dass jedem Kommunikationsteilnehmer ein eindeutiger Alias zugewiesen ist, der sich aus folgendem Bildungsschema ergibt: Ausgehend von einem zentralen Kommunikationsteilnehmer wird in einem ersten Zuweisungsabschnitt für alle Kommunikationsteilnehmer, die mit dem zentralen Kommunikationsteilnehmer in einer hierarchisch gleichen Linie verbunden sind, ein eine erste Ebene der Kommunikationsverbindungen in dem Automatisierungssystem bezeichnender Bestandteil des jeweiligen Alias dieser Kommunikationsteilnehmer, insbesondere Netzwerkkomponenten, mit einem zunehmenden Abstand vom zentralen Kommunikationsteilnehmer erhöht. Wenn also z.B. für den zentralen Kommunikationsteilnehmer als Alias die Ziffer oder der String "1" vorgesehen ist, ergibt sich für einen dem zentralen Kommunikationsteilnehmer benachbarten Kommunikationsteilnehmer, insbesondere eine Netzwerkkomponente, ein Alias, der im Vergleich zu dem Alias des zentralen Kommunikationsteilnehmers erhöht ist, also z.B. "2". Für weitere nachfolgende Kommunikationsteilnehmer, also mit zunehmenden Abstand vom zentralen Kommunikationsteilnehmer, ergibt sich jeweils ein Alias der im Vergleich zum Alias des entlang der gleichen Linie vorangehenden Kommunikationsteilnehmers erhöht ist. Die Erhöhung des numerischen Wertes des Alias muss nicht notwendig in Inkrementen von Eins erfolgen, sondern kann auch den tatsächlichen räumlichen Abstand reflektieren.

In einem zweiten Zuweisungsabschnitt wird für alle auf diese Weise erreichten Kommunikationsteilnehmer, bei denen es sich um Netzwerkkomponenten der hier beschriebenen Art handelt und mit denen über deren dritten Port mittel- oder unmittelbar zumindest ein Kommunikationsteilnehmer verbunden ist, für diesen verbundenen Kommunikationsteilnehmer ein Alias vergeben. Dieser wird aus dem Alias der hierarchisch übergeordneten Netzwerkkomponente durch Hinzufügung eines eine hierarchisch untergeordnete Ebene der Kommunikationsverbindungen in dem Automatisierungssystem bezeichnenden Bestandteils gebildet, also z.B. für einen Kommunikationsteilnehmer, der einer Netzwerkkomponente mit dem Alias "3" unmittelbar nachfolgt, der Alias "3.1".

Für alle Netzwerkkomponenten, denen gemäß dem obigen zweiten Zuweisungsabschnitt ein Alias zugewiesen wurde, werden schließlich in einem dritten Zuweisungsabschnitt der erste und der zweite Zuweisungsabschnitt wiederholt, wobei die jeweilige Netzwerkkomponente an die Stelle des zentralen Kommunikationsteilnehmers und die jeweilige hierarchische Ebene an die Stelle der ersten Ebene der Kommunikationsverbindungen tritt. Insoweit handelt es sich also um ein rekursives Bildungsschema, das am Ende der Rekursion alle Kommunikationsteilnehmer erfasst hat, so dass in dem Automatisierungssystem jedem Kommunikationsteilnehmer ein eindeutiger Alias zugewiesen ist, der es bei Verwendung von Netzwerkkomponenten der hier beschriebenen Art oder von Netzwerkkomponenten, die nach dem Verfahren der hier beschriebenen Art arbeiten, ermöglicht, Telegramme in der beschriebenen effizienten Art und Weise weiterzuleiten.

Insoweit betrifft die Erfindung auch ein Verfahren zur Datenübermittlung in einem Automatisierungssystem mit einer Anzahl von Kommunikationsteilnehmern, von denen zumindest einzelne als Netzwerkkomponente der hier beschriebenen Art oder als nach dem hier beschriebenen Verfahren betriebene oder betreibbare Netzwerkkomponente ausgeführt sind. Bei diesem Verfahren ordnet jede Netzwerkkomponente Telegramme, die diese zur Weiterleitung an einen jeweiligen Zielkommunikationsteilnehmer empfangen hat, in Ansehung zumindest der eine eigenen Ebene der Netzwerkkomponente bezeichnenden Bestandteile des von jedem derartigen Telegramm umfassten Alias des Zielkommunikationsteilnehmers (Zielalias). Eine Netzwerkkomponente mit dem Alias "2.3", die damit bereits als einer hierarchisch zweiten Ebene zugehörig erkennbar ist, ordnet also Telegramme, die bei ihr eingehen und zur Weiterleitung an Zielkommunikationsteilenehmer mit dem Alias "2.4", "2.6", "2.6.1", "2.7" bestimmt sind, nach dem zu dieser zweiten Ebene gehörigen Aliasbestandteil, also "4", "6", "6" und "7". Auf Basis der so geordneten Telegramme wird durch deren Aneinanderreihung und Kombination in einem einzigen Frame anstelle der bisher bei jedem Telegramm übertragenen Einzelframes ein kompaktiertes Frame (kompaktiertes Telegramm) gebildet. Dieses wird anstelle der während eines vorgegebenen oder vorgebbaren Zeitraums empfangenen einzelnen Frames weiterleitet. Der Vorteil dieses Aspekts der Erfindung, der ggf. selbständig patentfähig ist, besteht darin, dass in einem Automatisierungssystem, in dem jedem Kommunikationsteilnehmer ein Alias nach dem oben beschriebenen Bildungsschema zugeordnet oder zuordenbar ist, anhand dieser Bezeichnungen, die als Bezeichnung des jeweiligen Zielkommunikationsteilnehmers auch in versandten Telegrammen enthalten sind, die in solchen Telegrammen enthaltenen Nutzdaten, also Datagramme, leicht so geordnet werden können, wie sie entlang der jeweiligen Linie von den zu dieser Linie gehörigen Kommunikationsteilnehmern "konsumiert", d.h. empfangen und ausgewertet werden. Eine Kompaktierung von Telegrammen durch Aneinanderreihung mehrerer Einzeltelegramme oder der davon umfassten Nutzdaten ist zwar an sich bekannt, der hier im Vordergrund stehende Aspekt ist jedoch, dass die Nutzdaten in dem kompaktierten Telegramm auch in einer auf die Topologie der Kommunikationsteilnehmer abgestellten Reihenfolge angeordnet sind, so dass sich für die Konsumption der einzelnen Nutzdaten einfache Verhältnisse ergeben. Der Vorteil besteht darin, dass nur eine Nachricht, also nur das kompaktierte Telegramm hantiert werden muss und mit diesem einen Telegramm eine Mehrzahl von Zielkommunikationsteilnehmern erreicht werden kann, so dass auch komplexe Automatisierungsstrukturen sicher beherrscht werden. Zudem wird durch eine Dynamisierung des Frameaufbaus und das Entkoppeln von Senden und Empfangen eine Optimierung des Datendurchsatzes erreicht.

Eine besondere Möglichkeit zu einer solchen Steigerung des Datendurchsatzes ergibt sich, wenn jeder Kommunikationsteilnehmer im Zusammenhang mit einem Empfang eines kompaktierten Telegramms darin für ihn bestimmte Nutzdaten, also Datagramme, entnimmt und das kompaktierte Telegramm um das oder jedes entnommene Datagramm verkürzt oder wenn das kompaktierte Telegramm um das oder jedes entnommene Datagramm verkürzt wird.

Bei kompaktierten Telegrammen, also sich aus einer Zusammenfassung einer Mehrzahl einzelner Datagramme ergebenden und damit umfangreichen, langen Frames kann es vorkommen, dass ein erster Kommunikationsteilnehmer bereits Datagramme zu einem Zeitpunkt entnehmen könnte, zu dem die komplette Übermittlung des kompaktierten Telegramms durch den jeweils sendenden Kommunikationsteilnehmer noch nicht abgeschlossen ist. Normalerweise würde beim Empfang eines Telegramms ein Kommunikationsteilnehmer einen Empfang eines am Ende des Telegramms vorgesehenen Prüfcodes abwarten, die Korrektheit des Prüfcodes verifizieren und erst dann Zugriff auf die enthaltenen Nutzdaten nehmen. Wenn bei langen Telegrammen bereits Nutzdaten bei einem ersten Empfänger zu einem Zeitpunkt vorliegen, zu dem der Transfer des Telegramms durch den momentanen Sender noch nicht vollständig abgeschlossen ist, kann der Empfänger nach der bisherigen Situation noch nicht auf die Nutzdaten zugreifen, weil diese noch nicht anhand des noch nicht vorliegenden Prüfcodes verifizierbar sind. Es muss dann der vollständige Empfang des Telegramms abgewartet und dieses zwischengespeichert werden. Um diesen Nachteil zu umgehen, ist vorteilhaft vorgesehen, dass jedem Datagramm in einem kompaktierten Telegramm ein eigenes Prüfdatum zugeordnet ist. Dann können alle Nutzdaten, zu denen beim jeweiligen Empfänger bereits dieses Prüfdatum vorliegt, anhand des Prüfdatums verifiziert und ggf. konsumiert werden. Der Empfang des am Ende des kompaktierten Telegramms ggf. immer noch vorhandenen Prüfcodes braucht nicht abgewartet werden. Das Vorsehen jeweils eines Prüfdatums für jedes von dem Telegramm umfasste Datagramm ermöglicht also einen frühzeitigen Zugriff auf die von dem Telegramm umfassten Nutzdaten, so dass ebenfalls die Kommunikation beschleunigt wird, indem z.B. das jeweilige Datagramm unmittelbar konsumiert oder für eine Weiterleitung an nachfolgende Kommunikationsteilnehmer vorgesehen wird.

In Kombination mit einer beschleunigten Weiterleitung und einer vorteilhaften Anordnung der Datagramme erreicht man bei diesem Verfahren eine hohe Effizienz. Die Bearbeitung der Datagramme kann Schritt haltend mit deren Weiterleitung durchgeführt werden und somit wird nur ein Faktor, d.h. nur die Dauer der Bearbeitung oder nur die Dauer der Weiterleitung, für eine Kalkulation des Eintreffens eines Datagramms beim jeweiligen Zielkommunikationsteilnehmer wirksam.

Im Zusammenhang mit den oben beschriebenen und nachfolgend weiter erläuterten Verfahren betrifft die Erfindung auch ein Computerprogramm mit durch einen Computer ausführbaren Programmcodeanweisungen zur Implementierung des jeweiligen Verfahrens. Also zur Implementierung des Verfahrens zur gezielten Weiterleitung von empfangenen Telegrammen über einen bestimmten Port, zur Implementierung des Verfahrens zur Zurückweisung einzelner Telegramme als Irrläufer, zur Implementierung des Verfahrens zur Zuweisung jeweils eines Alias an alle von einem Automatisierungssystem umfassten Kommunikationsteilnehmer und zur Implementierung des Verfahrens zur Aneinanderreihung und Sortierung einzelner Datagramme zum Erhalt eines kompaktierten Telegramms sowie zur Implementierung des Verfahrens, bei dem ein kompaktiertes Telegramm verkürzt wird, sobald in davon umfassten Datagrammen enthaltene Nutzdaten durch einen als Empfänger fungierenden Kommunikationsteilnehmer konsumiert wurden. Schließlich betrifft die Erfindung auch ein Computerprogrammprodukt mit einem oder mehreren derartigen durch einen Computer ausführbaren Computerprogramm bzw. -programmen. Als Computerprogrammprodukt kommt ein Speichermedium oder dergleichen in Betracht. Z.B. ein Datenträger in Form einer Diskette aber auch ein Halbleiterspeicher, insbesondere ein in einem zur Funktion als Kommunikationsteilnehmer im hier verwendeten Sinne geeigneten oder vorgesehenen Gerät verbauter oder mit diesem kombinierbarer Halbleiterspeicher.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Darin zeigen
- FIG 1: eine schematisch vereinfachte Darstellung eines Auto- matisierungssystems mit davon umfassten, durch ein Netzwerk kommunikativ verbundenen Kommunikationsteil- nehmern, von denen zumindest einzelne als Netzwerk- komponente gemäß der vorliegenden Erfindung ausge- führt sind,
- FIG 2: eine schematisch vereinfachte Darstellung einer sol- chen Netzwerkkomponente,
- FIG 3: eine Darstellung zur Verdeutlichung von bei einer Datenübertragung im Automatisierungssystem verwende- ten Bezeichnern der einzelnen Kommunikationsteilneh- mer,
- FIG 4: eine Darstellung zur Verdeutlichung eines selbständi- gen Aspekts der Erfindung nach dem die Kommunikation im Automatisierungssystem dadurch verbessert wird, dass aus einzelnen, jeweils Datagramme als Nutzdaten umfassenden Telegrammen ein kompaktiertes, mehrere Datagramme unfassendes Telegramm gebildet wird,
- FIG 5: eine Darstellung zur Verdeutlichung des Effekts einer Konsumption von in einem kompaktierten Telegramm ent- haltenen Datagrammen durch den jeweiligen Empfänger und einer entsprechenden Verkürzung des kompaktierten Telegramms,
- FIG 6: eine Darstellung zur Verdeutlichung von Kommunikation mit einer nicht vom Automatisierungssystem umfassten Domäne und
- FIG 7: dazu eine schematisch vereinfachte Darstellung einer Übernahme von Telegrammen aus einer solchen externen Domäne und eine dabei erfolgende Aufteilung solcher Telegramme.

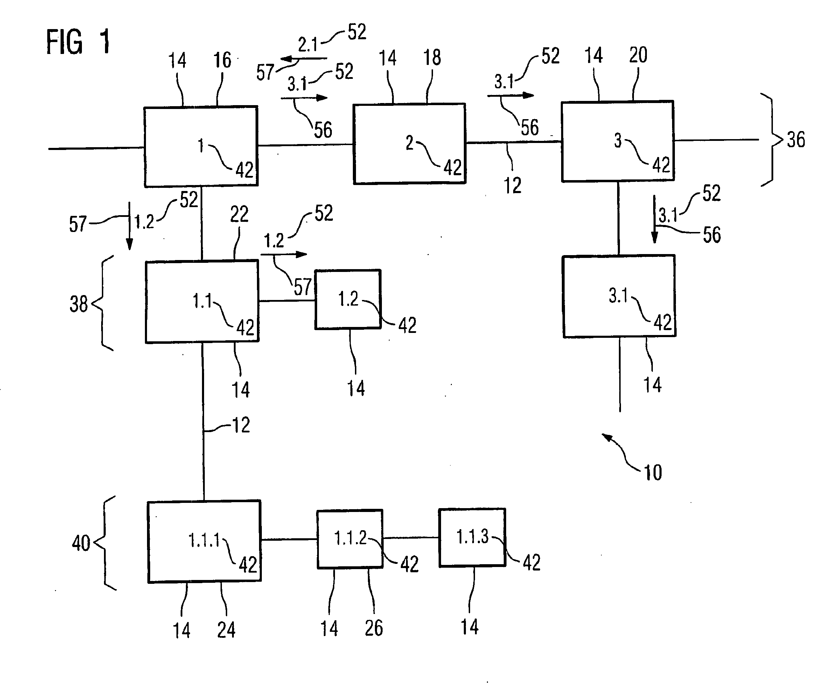

FIG 1 zeigt eine schematisch vereinfachte Darstellung eines insgesamt mit 10 bezeichneten Automatisierungssystems. Das Automatisierungssystem 10 umfasst eine Anzahl von in einem Netzwerk 12 zusammengefassten und insoweit kommunikativ miteinander verbundenen Kommunikationsteilnehmern 14.

Bei einzelnen oder allen Kommunikationsteilnehmern 14 handelt es sich um Automatisierungsgeräte, also z.B. Steuerungen, wie speicherprogrammierbare Steuerungen, sogenannte dezentrale Peripheriegeräte, Prozessrechner, (Industrie-)Computer und dergleichen oder Antriebssteuerungen, Frequenzumrichter und ähnliches, also Geräte, Einrichtungen oder Systeme, wie sie zur Steuerung, Regelung und/oder Überwachung technologischer Prozesse, z.B. zum Umformen oder Transportieren von Material, Energie oder Information etc., eingesetzt werden oder einsetzbar sind, wobei insbesondere über geeignete technische Einrichtungen, wie z.B. Sensoren oder Aktoren, Energie aufgewandt oder gewandelt wird. Dargestellt ist jeweils nur der Kommunikationsteilnehmer 14 in schematisch vereinfachter Form. Je nach Betrachtungsweise kann ein solcher Kommunikationsteilnehmer auch als Bestandteil eines Automatisierungsgerätes der oben beschriebenen Art aufgefasst werden, derart, dass er die Funktionalität des jeweiligen Automatisierungsgeräts um Kommunikationsfunktionalitäten ergänzt.

Einzelne Kommunikationsteilnehmer 14 können als Netzwerkkomponenten 16, 18, 20, 22, 24, 26 im Sinne der vorliegenden Erfindung ausgeführt sein. Nachfolgend wird nur noch auf einzelne Kommunikationsteilnehmer 14 oder derartige Netzwerkkomponenten 16-26 oder eine einzelne derartige Netzwerkkomponente 16-26 Bezug genommen, da es für das Verständnis der Erfindung nicht darauf ankommt, ob die Netzwerkkomponente 16-26 Bestandteil eines umfassenderen Systems, z.B. einer speicherprogrammierbaren Steuerung, ist oder ob die Netzwerkkomponente 16-26 ohne darüber hinausgehende Funktionalität Bestandteil des Automatisierungssystems 10 ist. Tatsächlich können einzelne Netzwerkkomponenten 16-26 als Ersatz bisheriger so genannter Switches als Kommunikationsteilnehmer 14 in dem Automatisierungssystem 10 vorgesehen sein, wo sie einzelne Segmente des Netzwerks 12 miteinander verbinden. Andererseits können einzelne Netzwerkkomponenten 16-26 Bestandteil z.B. einer speicherprogrammierbaren Steuerung, eines Leitrechners oder dergleichen sein und darin die gleiche Funktionalität wie eine eigenständige Netzwerkkomponente 16-26 bereitstellen. Die weitere Beschreibung bezieht sich folglich nur noch auf Kommunikationsteilnehmer 14 und Netzwerkkomponenten 16-26.

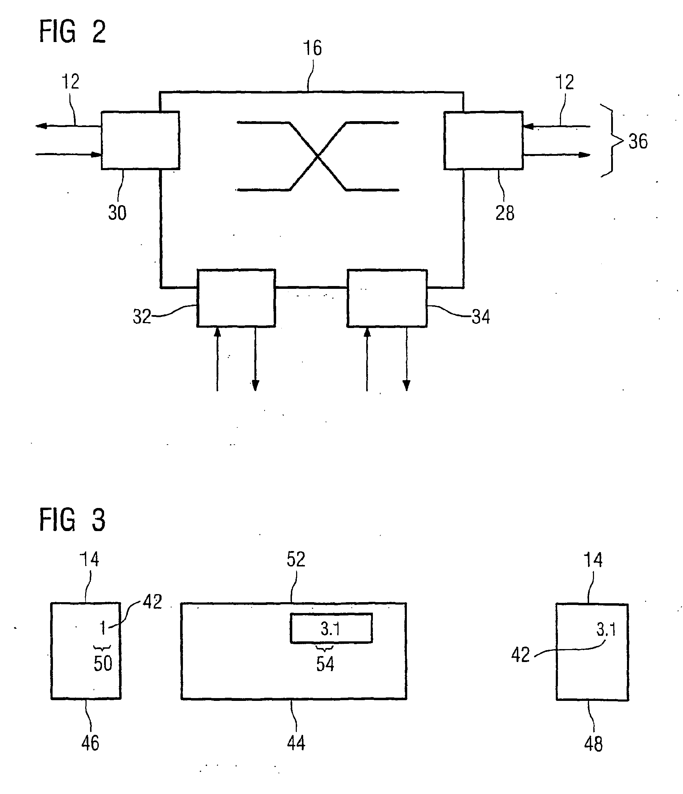

Die Darstellung in FIG 1 nimmt bereits wesentliche Aspekte der Erfindung vorweg, die im Folgenden mit Rückgriff auch FIG 2 beschrieben werden.

FIG 2 zeigt eine einzelne Netzwerkkomponente 16. Diese umfasst einen ersten Ein- und Ausgangsport 28, einen zweiten Ein- und Ausgangsport 30 und einen dritten Ein- und Ausgangsport 32. In besonderen Ausführungen der Netzwerkkomponente 16 können weitere Ein- und Ausgangsports 34, also auch mehr als der eine dargestellte weitere Ein- und Ausgangsport 34, vorgesehen sein. Die Beschreibung wird fortgesetzt für Netzwerkkomponenten 16-26, die zumindest einen ersten, zweiten und dritten Ein-und Ausgangsport 28-32 - im Folgenden kurz als Port 28, 30, 32 bezeichnet - umfassen. Jede Netzwerkkomponente 16-26 kann über jeden der Ports 28-32 Daten aus dem Automatisierungssystem 10 empfangen oder Daten im Automatisierungssystem 10 weiterleiten. Über den ersten und zweiten Port 28, 30 besteht oder wird hergestellt eine Verbindung zu anderen Kommunikationsteilnehmern 14, insbesondere zu anderen Netzwerkkomponenten 18-26, die mit der jeweiligen Netzwerkkomponente 16, von der die Verbindung ausgeht, einer hierarchisch gleichen Linie 36 (vgl. auch FIG 1) der Kommunikationsverbindungen in dem Automatisierungssystem 10 angehören. Über den dritten und ggf. weitere Ports 32, 34 besteht oder ist herstellbar eine Anbindung an andere Kommunikationsteilnehmer 14, insbesondere an andere Netzwerkkomponenten 22, 24, in einer hierarchisch untergeordneten Linie 38, 40 (vgl. FIG 1). Der erste und der zweite Port 28, 30 sind damit exklusiv für Datenübertragungen innerhalb einer hierarchisch gleichen Linie 36 vorgesehen, während der dritte und jeder eventuelle weitere Port 32, 34 exklusiv für Datenübertragungen in eine hierarchisch untergeordneten Linie 38, 40 vorgesehen sind. Durch eine solche eindeutige Zuordnung lässt sich die Datenübertragung in dem Automatisierungssystem 10 nach einem fixen Schema organisieren, welches das Auffinden eines gültigen Kommunikationspfades zu einem Zielkommunikationsteilnehmer 14 erleichtert, ohne dass dazu in den einzelnen entlang des Kommunikationspfades passierten Kommunikationsteilnehmern 14 umfangreiche Daten über mittel- oder unmittelbar benachbarte Kommunikationsteilnehmer 14 gespeichert werden müssen. Zudem lässt sich der Datendurchsatz in dem Automatisierungssystem 10 erhöhen, indem nach bisherigen Lösungen gemäß dem Stand der Technik unvermeidliche parallele Datenübertragungen über mehrere Ports 28-32, 34 der gleichen Netzwerkkomponente 16-26 vermieden werden.

In FIG 1 ist jeder Kommunikationsteilnehmer 14 mit einem im Folgenden auch Alias 42 genannten Bezeichner dargestellt. Den von der hierarchisch höchsten Linie 36 umfassten Netzwerkkomponenten 16, 18, 20 sind in der dargestellten Reihenfolge die Bezeichner "1", "2" und "3" als Alias 42 zugeordnet. Hierarchisch unterhalb der Netzwerkkomponente 16 mit dem Bezeichner" "1" als Alias 42 umfasst das Automatisierungssystem 10 zwei weitere jeweils hierarchisch gleiche Linien 38, 40 mit davon umfassten Kommunikationsteilnehmern 14 denen jeweils die Bezeichner "1.1", "1.2" bzw. "1.1.1", "1.1.2" und "1.1.3" als Alias 42 zugeordnet sind.

Jeder Alias 42 wird im Automatisierungssystem 10 einem Kommunikationsteilnehmer 14 eindeutig zugewiesen. Dazu wird das nachfolgend beschriebene Bildungsschema verwendet: Zunächst wird ausgehend von einem zentralen Kommunikationsteilnehmer 14, dem aufgrund seiner Eigenschaft als zentraler Kommunikationsteilnehmer 14 ein initialer Alias 42, also z.B. "1", zugewiesen wird, für alle Kommunikationsteilnehmer 14, die mit dem zentralen Kommunikationsteilnehmer 14 in einer hierarchisch gleichen Linie 36 verbunden sind, ein eine erste Ebene der Kommunikationsverbindungen in dem Automatisierungssystem 10 bezeichnender Bestandteil des jeweiligen Alias 42 dieses Kommunikationsteilnehmers 14 mit einem Abstand vom zentralen Kommunikationsteilnehmer erhöht. Mit anderen Worten: Ausgehend von dem initialen Alias 42 mit dem Wert "1" wird ein die gleiche Ebene der Kommunikationsverbindungen bezeichnender Bestandteil des jeweiligen Alias 42 erhöht. Es ergeben sich also für die dem zentralen Kommunikationsteilnehmer 14 nachfolgenden Netzwerkkomponenten 18, 20 als Alias 42 die Bezeichner "2" bzw. "3".

Für alle auf diese Weise erreichten Kommunikationsteilnehmer 14, bei denen es sich um Netzwerkkomponenten 16-26 der hier beschriebenen Art handelt und mit denen über deren dritten Port 32 mittel- oder unmittelbar zumindest ein Kommunikationsteilnehmer 14 verbunden ist, wird für diesen Kommunikationsteilnehmer 14 ein Alias 42 vergeben, der aus dem Alias der hierarchisch übergeordneten Netzwerkkomponente 16-20 durch Hinzufügung eines eine hierarchisch untergeordnete Ebene der Kommunikationsverbindungen in dem Automatisierungssystem 10 bezeichnenden Bestandteils gebildet wird. Für die Netzwerkkomponente 16, der als Alias 42 der Bezeichner "1" zugewiesen ist, wird für die über dessen dritten Port 32 erreichbare Netzwerkkomponente 22 als Alias 42 entsprechend der Bezeichner "1.1" vergeben, wobei die Hinzufügung des Bestandteils ".1" die hierarchisch untergeordnete Ebene der Kommunikationsverbindungen in dem Automatisierungssystem 10 bezeichnet. Entsprechendes gilt für die Netzwerkkomponente 20, der als Alias 42 der Bezeichner "3" zugeordnet ist und dessen über deren dritten Port 32 erreichbarem Nachfolger als Bezeichner der Alias 42 "3.1" zugeordnet ist, wobei auch hier der hinzugefügte Bestandteil ".1" eine hierarchisch untergeordnete Ebene bezeichnet. Für in einer hierarchisch untergeordneten Ebene, also z.B. die der Linie 38 nachfolgende, weitere untergeordnete Linie 40, werden entsprechend weitere derartige Bestandteile dem jeweiligen Alias 42 hinzugefügt, so dass sich für die in FIG 1 mit der Bezugsziffer 24 bezeichnete Netzwerkkomponente 24 als Alias 42 der Bezeichner "1.1.1" ergibt. Wenn der Kommunikationsteilnehmer 14, der in FIG 1 mit dem Bezeichner "1.2" als Alias 42 dargestellt ist, als Netzwerkkomponente 16-26 ausgeführt ist und über dessen dritten Port 32 weitere Kommunikationsteilnehmer 14 angeschlossen wären, ergäbe sich für einen ersten derartigen Kommunikationsteilnehmer 14 ein Bezeichner "1.2.1" als Alias 42, usw.

Für alle Netzwerkkomponenten 16-26, denen gemäß den zuletzt beschriebenen Maßnahmen ein Alias zugewiesen wurde, der einen Bestandteil umfasst, der eine hierarchisch untergeordnete Ebene bezeichnet, werden sämtliche oben beschriebenen Maßnahmen des Bildungsschemas wiederholt, wobei die jeweilige Netzwerkkomponente an die Stelle des zentralen Kommunikationsteilnehmers 14 und die jeweilige hierarchische Ebene 36, 38, 40 an die Stelle der ersten Ebene 36 der Kommunikationsverbindungen tritt. Das Bildungsschema ist also ein rekursives Bildungsschema und am Ende der Rekursion ist allen von dem Automatisierungssystem umfassten Kommunikationsteilnehmern 14 ein eindeutiger Alias 42 zugewiesen.

Die Übermittlung von Daten zwischen einzelnen Kommunikationsteilnehmern 14 in einem solchen Automatisierungssystem wird nachfolgend anhand FIG 3 mit Bezugnahme auf FIG 1 und FIG 2 beschrieben. FIG 3 zeigt schematisch vereinfacht ein Telegramm 44, also eine Organisationsform von über das Netzwerk 12 (FIG 1) zu übermittelnden Daten, z.B. ein so genanntes Frame mit zumindest einem davon umfassten Datagramm. Das Telegramm 44 wird von einem als Sender 46 fungierenden Kommunikationsteilnehmer 14 versandt und ist für einen als Empfänger 48 fungierenden Kommunikationsteilnehmer 14 bestimmt. Der Empfänger 48 wird ggf. auch als Zielkommunikationsteilnehmer bezeichnet und, nachdem grundsätzlich jeder Kommunikationsteilnehmer 14 als Zielkommunikationsteilnehmer in Betracht kommen kann, ggf. auch verallgemeinernd mit dem Bezugszeichen 14 bezeichnet.

Für die weitere Beschreibung soll davon ausgegangen werden, dass das Telegramm 44 von der in FIG 1 mit dem Bezeichner "1" als Alias 42 dargestellten Netzwerkkomponente 16 (Sender 46) an den in FIG 1 mit dem Bezeichner "3.1" als Alias 42 dargestellten Kommunikationsteilnehmer 14 (Empfänger 48) gesendet werden soll. Dazu umfasst das Telegramm 44 als Zielalias den Alias 42 des Zielkommunikationsteilnehmers 14. Allgemein gilt, dass in dem Automatisierungssystem 10 zwischen den Kommunikationsteilnehmern 14 versandte Telegramme 44 einen Empfänger 48 oder Zielkommunikationsteilnehmer 14 zumindest auch anhand dessen Alias 42 bezeichnen. Sobald das Telegramm 44 im Sender 46 zur Weiterleitung, also zur Einspeisung in das Netzwerk 12, bereitsteht, ist für den Sender 46 zu entscheiden, über welchen der von dem Sender 46 umfassten Ports 28-32 eine Weiterleitung erfolgen soll. Dazu wird zunächst ein die eigene Ebene des Senders 46 bezeichnender Bestandteil des eigenen Alias 42, also "1", als relevanter eigener Aliasabschnitt 50 betrachtet. Daneben wird von einem Alias 42 des Empfängers 48 (Zielalias 52) ebenfalls ein entsprechender relevanter Bestandteil gebildet und als relevanter Zielaliasabschnitt 54 weiter verwendet. Solange der relevante eigene Aliasabschnitt 50 und der relevante Zielaliasabschnitt 54 in dieser Reihenfolge einer "kleiner gleich"-Relation genügen, wird das Telegramm 44 über den ersten Port 28 der betreffenden Netzwerkkomponente 16 bis 26 weitergeleitet. Auf diese Weise gelangt das in FIG 3 dargestellte Telegramm 44 zunächst von der in FIG 1 mit dem Bezeichner "1" als Alias 42 bezeichneten Netzwerkkomponente 16 zu der mit dem Bezeichner "2" als Alias 42 bezeichneten Netzwerkkomponente 18 und schließlich zu der mit dem Bezeichner "3" als Alias 42 bezeichneten Netzwerkkomponente 20. Hier ist für den Vergleich von relevantem eigenem Aliasabschnitt 50 und relevantem Zielaliasabschnitt 54 die bisher erfüllte "kleiner gleich"-Relation nicht mehr erfüllt, stattdessen ist eine "ist gleich"-Relation erfüllt, die hier bewirkt, dass das Telegramm 44 über den dritten Port 32 weitergeleitet wird und damit zum Empfänger 48 gelangt ist.

Die gleiche Kommunikation ist in FIG 1 auch mit einer ersten Gruppe von Pfeilen 56 verdeutlicht, wobei neben jedem Pfeil 56 jeweils der Zielalias 52 angegeben ist und ein Pfeil 56 zusammen mit einem Zielalias 52 auch als andere Darstellung eines Telegramms 44 (FIG 3) aufgefasst werden kann. Wenn zu einem späteren Zeitpunkt ein Telegramm 44 von der in FIG 1 mit dem Bezeichner "2" als Alias 42 dargestellten Netzwerkkomponente 18 an den mit dem Bezeichner "1.2" als Alias 42 dargestellten Kommunikationsteilnehmer 14 gesendet werden soll, ergeben sich grundsätzlich analoge Verhältnisse, die nachfolgend mit Bezug auf weitere Pfeile 58 in Verbindung mit einem Zielalias 52, wie in FIG 1 dargestellt, erläutert werden. Danach ergibt sich, dass, sobald das Telegramm 44 in der als Sender 46 fungierenden Netzwerkkomponente 18 zum Versenden bereitsteht, zunächst der relevante eigene Aliasabschnitt 50, also "2", mit dem relevanten Zielaliasabschnitt 52, also "1", verglichen wird. Diesmal genügen die relevanten Aliasabschnitte 50, 54 einer "größer gleich"-Relation, so dass zum Weiterleiten des Telegramms 44 der zweite Port 30 ausgewählt wird. Damit gelangt das Telegramm 44 zu der in FIG 1 mit dem Bezeichner "1" als Alias 42 dargestellten Netzwerkkomponente 16. Hier ergibt sich beim Vergleich von relevantem eigenen Aliasabschnitt 50 und relevantem Zielaliasabschnitt 54 eine Identität, so dass für die Weiterleitung des Telegramms 44 der dritte Port 32 ausgewählt wird. Damit gelangt das Telegramm 44 in die zweite Ebene 38, ist aber noch nicht beim Empfänger 48 eingetroffen. Für die Weiterleitung wird jetzt für die mit dem Bezeichner "1.1" als Alias 42 dargestellte Netzwerkkomponente dessen die eigene Ebene bezeichnender Bestandteil des eigenen Alias 42 als relevanter eigener Aliasabschnitt 50 gebildet; hier von "1.1" die letzte Ziffer, also "1". Der entsprechende Bestandteil des Zielalias 52 bezieht sich jetzt auf die gleiche Ebene 38, so dass als relevanter Zielaliasabschnitt 54 des Zielalias 52 sich nunmehr ebenfalls die letzte Ziffer, also "2", ergibt. Damit wird für die Weiterleitung des Telegramms 44 zum Empfänger 48 durch die Netzwerkkomponente 22 der erste Port 28 ausgewählt.

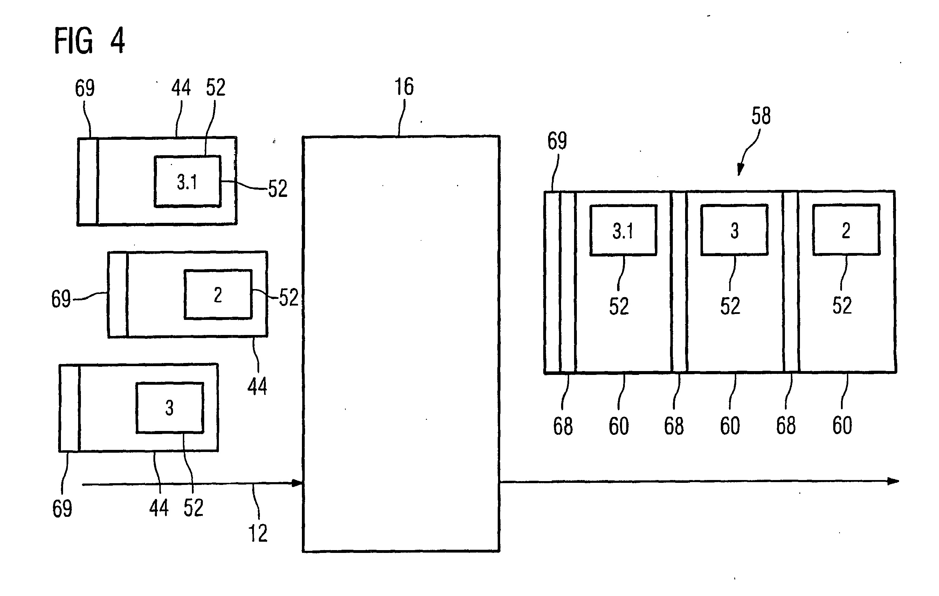

FIG 4 zeigt nunmehr eine schematische Darstellung zur Erläuterung eines weiteren, ggf. selbständig patentfähigen Aspekts der Erfindung, wonach jede Netzwerkkomponente 16-26 (FIG 1) zur Weiterleitung an einen jeweiligen Empfänger 48 (FIG 3) während einer vorgegebenen oder vorgebbaren Zeitspanne empfangene Telegramme 44 in Ansehung zumindest der eine eigene Ebene der Netzwerkkomponente 16 bezeichnenden Bestandteile des von jedem derartigen Telegramm 44 umfassten Alias 42 des Empfängers 48 (Zielalias 52) ordnet.

Die Netzwerkkomponente 16 ist der obersten Ebene 36 zugeordnet, so dass jeweils die erste Ziffer des Zielalias 52, der die eigene Ebene der Netzwerkkomponente 16 bezeichnende Bestandteil ist. Demnach werden die in FIG 4 als von der Netzwerkkomponente 16 empfangen dargestellten Telegramme 44 entsprechend der Übertragungsrichtung, also je nach zu verwendendem Port 28, 30, in aufsteigender oder absteigender Reihenfolge sortiert. Die Netzwerkkomponente 16 generiert daraus ein kompaktiertes Telegramm 58. Dieses wird dann von der Netzwerkkomponente 16 weitergeleitet und gelangt auf diese Weise zu dem jeweiligen Empfänger 48. Bei der Weiterleitung des kompaktierten Telegramms 58 entnimmt jeder Kommunikationsteilnehmer 14 mit einem Empfang eines kompaktierten Telegramms 58 für ihn bestimmte Nutzdaten, also Datagramme 60, wobei das kompaktierte Telegramm 58 um das oder jedes konsumierte/entnommene Datagramm 60 verkürzt wird.

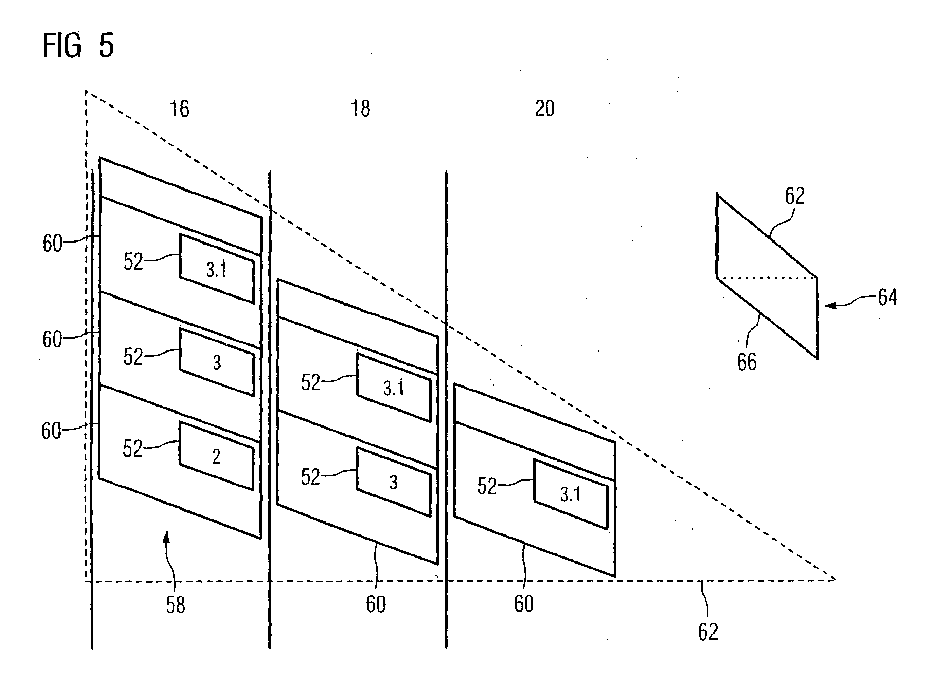

Der damit erreichbare Zeitgewinn lässt sich graphisch veranschaulichen. Dazu wird auf FIG 5 verwiesen. In FIG 5 sind in horizontaler Richtung als Spalten 16, 18, 20 die bereits in FIG 1 dargestellten Netzwerkkomponenten 16-20 veranschaulicht. Ausgehend von der Netzwerkkomponente 16 ist ein kompaktiertes Telegramm 58 mit drei Datagrammen 60 zu übermitteln, wie zuvor anhand von FIG 4 erläutert. Sobald das kompaktierte Telegramm 58 die Netzwerkkomponente 18 erreicht, konsumiert diese das für sie bestimmte Datagramm 60. In diesem Zusammenhang wird das kompaktierte Telegramm 58 entsprechend verkürzt. Sobald das kompaktierte Telegramm 58 daraufhin die Netzwerkkomponente 20 erreicht, konsumiert diese das darin für sie bestimmte Datagramm 60, so dass das kompaktierte Telegramm 58 jetzt auf ein Datagramm 60 reduziert ist, das noch zum durch den Zielalias 52 identifizierten Kommunikationsteilnehmer 14 weitergeleitet wird. Die in FIG 5 dargestellte Situation, bei der sich in einer graphischen Darstellung die Gesamtfläche der übermittelten Telegramme 58 einem Dreieck 62 annähert, ist eine angestrebte optimale Situation, wohingegen ohne eine anfängliche Kompaktierung und daraufhin eine sukzessive Konsumption sich als Fläche der dann in einzelnen Frames übermittelten Datagramme 60 eher ein Parallelogramm 64 als Kombination des dargestellten Dreiecks 62 mit einem weiteren Dreieck 66 ergibt, wie oben rechts in FIG 5 dargestellt.

Als Maß für die Effizienz der Übertragung kann ein Abstand zwischen dem Ursprung des gewählten Koordinatensystems und der "äußersten Ecke" des zuletzt verbleibenden Telegramms 58 angesehen werden, dieser Abstand ist kürzer, wenn sich die Gesamtfläche der übermittelten Telegramme 58 einem Dreieck 62 annähert, als wenn für die Gesamtfläche der übermittelten Telegramme 58 von einem Parallelogramm 64 auszugehen wäre.

Damit ein Kommunikationsteilnehmer 14 in einem kompaktierten Telegramm 58 für ihn bestimmte Nutzdaten (Datagramme 60) unmittelbar zum Empfangszeitpunkt konsumieren kann, ist vorgesehen, dass jedem Datagramm 60 ein Prüfdatum 68 (FIG 4) zugeordnet ist. Mit einem solchen Prüfdatum 68 kann ein Datagramm 60 konsumiert werden, sobald bei einem Kommunikationsteilnehmer 14 (FIG 1) das Prüfdatum 68 und das damit abgesicherte Datagramm 60 vorliegen. Nach dem Stand der Technik war bisher eine Auswertung von Nutzdaten in einem Datagramm 60 erst dann möglich, wenn ein am Ende des Telegramms 44 vorgesehener Prüfcode 69 empfangen wurde. Durch das Vorsehen mehrerer Prüfdaten 68 kann jetzt unmittelbar nach Empfang jedes einzelnen Datagramms 60 auf dieses zugegriffen werden.

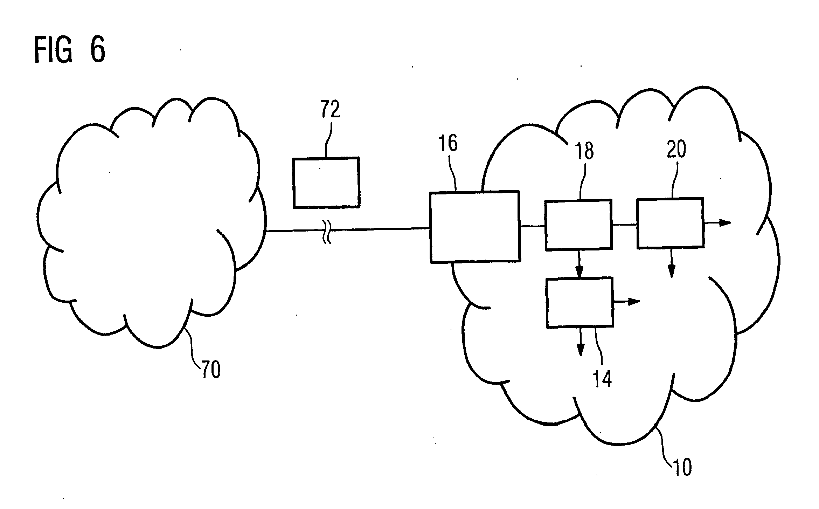

Gemäß einem weiteren, ggf. selbstständig patentfähigen Aspekt der Erfindung ist vorgesehen, dass die Netzwerkkomponenten 16-26 auch Kommunikation mit Kommunikationsteilnehmern einer nicht zum Automatisierungssystem 10 gehörenden Domäne 70 in optimierter Weise abwickeln. Dieser Aspekt der Erfindung wird mit Bezug auf die FIGen 6 und 7 weiter erläutert. In FIG 6 ist neben dem als lokale Domäne aufzufassenden Automatisierungssystem 10 eine entfernte Domäne 70 gezeigt. Zu dieser entfernten, nicht vom Automatisierungssystem 10 umfassten Domäne 70 besteht eine kommunikative Verbindung, für die eine der Netzwerkkomponenten 16-26, hier der in FIG 1 als erste Netzwerkkomponente 16 dargestellte Kommunikationsteilnehmer, als Schnittstelle fungiert.

Mit der entfernten Domäne 70 können zur Unterscheidung von den innerhalb des Automatisierungssystems 10 weitergeleiteten Telegrammen 44 als Fremdtelegramm 72 bezeichnete Datenpakete ausgetauscht werden. Diese Fremdtelegramme 72 können einen Umfang annehmen, wie er nach dem für die kommunikative Verbindung zwischen Automatisierungssystem 10 und entfernter Domäne 70 bestehenden Kommunikationsverbindung gewählten Protokoll zugelassen ist. Eine dabei zugelassene Länge kann zu groß sein, um von den Kommunikationsteilnehmern 14 innerhalb des Automatisierungssystems 10 weitergeleitet zu werden, ohne dabei eine für einen Datenverkehr innerhalb des Automatisierungssystems 10 definierte Zykluszeit zu überschreiten. Dementsprechend ist vorgesehen, dass jede als Schnittstelle zu einer nicht vom Automatisierungssystem 10 umfassten Domäne 70 fungierende Netzwerkkomponente 16 von dort eingehende Kommunikation derart verarbeitet, dass eingehende Fremdtelegramme 72 bereits während des Empfangs in Telegramme mit einer für deren Weiterleitung innerhalb des Automatisierungssystems 10 vorgegebenen oder vorgebbaren maximalen Länge aufgeteilt werden wobei die sich auf diese Weise ergebenden Telegramme unmittelbar nach Erzeugung durch Abteilung vom ursprünglichen Telegramm weitergeleitet oder zur Weiterleitung vorgesehen werden.

Die jeweilige Netzwerkkomponente 16 erkennt ihre "Schnittstelleneigenschaft", also ihre Zugehörigkeit zu dem Automatisierungssystem 10 einerseits und die Verbindung mit einer nicht zu dem Automatisierungssystem 10 gehörenden Domäne 70 andererseits, z.B. aufgrund eines so genannten Discovery-Protokolls. Dann wird z.B. in an sich bekannter Art ein diesbezüglicher Merker (nicht dargestellt) gesetzt und im weiteren Betrieb der Netzwerkkomponente 16 ausgewertet.

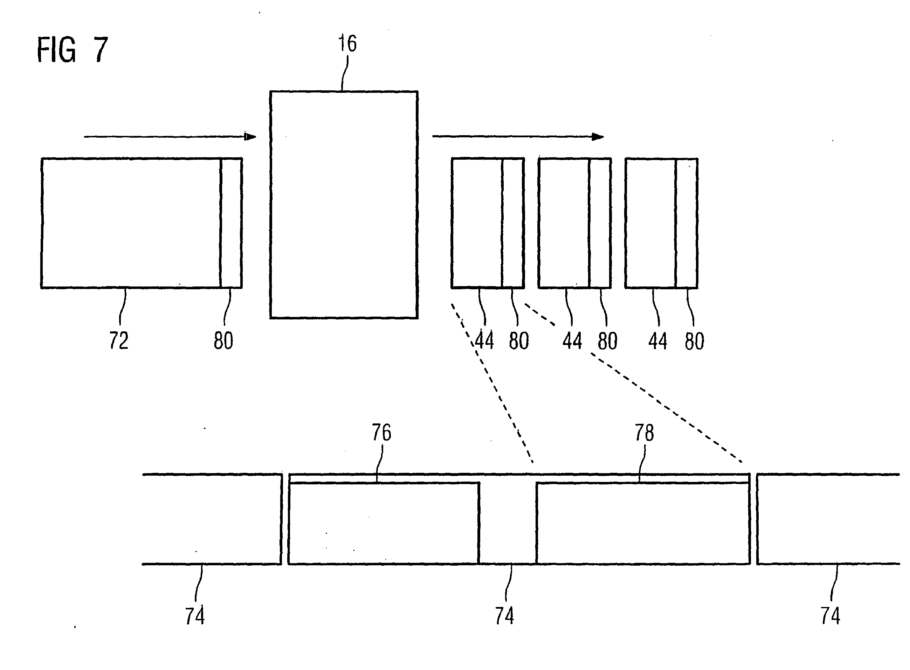

Die Weiterleitung der sich durch die Aufteilung ergebenden Telegramme 44 erfolgt dann nach dem oben beschriebenen Prinzip. Eine zusätzliche Besonderheit liegt allerdings darin, dass jede Netzwerkkomponente 16-26 grundsätzlich Kommunikation mit Kommunikationsteilnehmern 14 im Automatisierungssystem 10 periodisch abwickelt, wobei eine Datenübertragungsperiode 74 (vgl. FIG 7) in einen Abschnitt für zyklische Kommunikation (zyklischer Bereich 76) und einen Abschnitt für azyklische Kommunikation (azyklischer Bereich 78) unterteilt ist. Die sich aus der Aufteilung des Fremdtelegramms 72 ergebende Mehrzahl einzelner Telegramme 44 wird dabei durch die jeweilige Netzwerkkomponente 16 während des azyklischen Bereichs 78 weitergeleitet. Dies ist schematisch vereinfacht in FIG 7 dargestellt. Weiter ist dargestellt, dass die sich durch Aufteilung eines Fremdtelegramms 72 ergebenden Telegramme 44 sukzessive in den azyklischen Bereichen 78 von aufeinander folgenden, insbesondere unmittelbar aufeinander folgenden, Datenübertragungsperioden 74 weitergeleitet werden, d.h. jeweils eines der sich aus dem Fremdtelegramm 72 ergebenden Telegramme 44 wird in jeweils einem azyklischen Bereich 78 einer Datenübertragungsperiode 74 weitergeleitet. Für die Weiterleitung des kompletten Inhalts eines Fremdtelegramms 72 wird demnach eine der Anzahl der resultierenden Telegramme 44 entsprechende Anzahl von Datenübertragungsperioden 74 benötigt.

Damit die Weiterleitung der sich aus einer Aufteilung eines Fremdtelegramms 72 ergebenden Telegramme 44 innerhalb des Automatisierungssystems 10 ohne zusätzlichen Aufwand erfolgen kann, ist vorgesehen, dass die jeweils involvierte Netzwerkkomponente 16 die sich durch Aufteilung eines Fremdtelegramms 72 ergebenden Telegramme 44 jeweils um Adressdaten 80 ergänzt, wie sie vom ursprünglichen Fremdtelegramm 72 umfasst waren. Mit diesen Adressdaten 80 ist, ggf. unter Rückgriff auf eine FDB (weiter oben ausgeführt), eine Weiterleitung der resultierenden, einzelnen Telegramme 44 über eine eventuelle Mehrzahl von Kommunikationsteilnehmern 14 innerhalb des Automatisierungssystems 10 entlang eines Kommunikationspfades zum jeweiligen Zielkommunikationsteilnehmer, der ggf. auch außerhalb des Automatisierungssystems 10 liegen kann, möglich.

Analog zu der Aufteilung eines Fremdtelegramms 72 bei dessen Übernahme in das Automatisierungssystem 10 in eine Mehrzahl von einzelnen Telegrammen 44, die jeweils, insbesondere hinsichtlich ihrer Länge, den Konventionen innerhalb des Automatisierungssystems 10 genügenden, ist auch ein (wieder) Zusammenfassen solcher Telegramme 44 vorgesehen. Eine dann quasi als Ausgangsschnittstelle zur nicht zum Automatisierungssystem 10 gehörende Domäne 70 fungierende Netzwerkkomponente 16 setzt nacheinander empfangene Telegramme 44, an denen der Ursprung aufgrund einer Aufteilung eines Fremdtelegramms 72 und insoweit deren Zusammengehörigkeit erkennbar ist, z.B. anhand einer Senderkennung, zusammen. Dabei bleiben zumindest einmal die Adressdaten 80 erhalten, so dass eine Weiterleitung des resultierenden Telegramms an den ursprünglich vorgesehenen Zielkommunikationsteilnehmer möglich bleibt. Eine solche Zusammensetzung einer Mehrzahl von Telegrammen 44 zu einem "Summentelegramm" ergibt sich immer dann, wenn die zugrunde liegenden Telegramme 44 für eine nicht zum Automatisierungssystem 10 gehörende Domäne 70 bestimmt sind.

Zusammenfassend können einzelne Aspekte der Erfindung damit kurz wie folgt beschrieben werden: Die Erfindung betrifft vornehmlich eine Netzwerkkomponente 16-26 mit zumindest drei Ports 28-32 und ein Verfahren zu deren Betrieb, wobei die Ports 28-32 exklusiv einzelnen Hierarchieebenen einer Topologie eines Automatisierungssystems 10, in dem die Netzwerkkomponente 16-26 zusammen mit einer evtl. Mehrzahl weiterer Netzwerkkomponenten 16-26 betreibbar ist oder betrieben wird, zugeordnet sind, so dass eine effiziente Weiterleitung von in dem Automatisierungssystem 10 versandten Telegrammen 44 möglich wird, insbesondere anhand von der oder jeder Netzwerkkomponente 16-26 als Alias 42 zugeordneten Bezeichnern, die nach einem separaten Aspekt der Erfindung in einem insbesondere rekursiven Verfahren zugewiesen werden.

## Patentansprüche

1. Verfahren zum Betrieb einer Netzwerkkomponente als Kommunikationsteilnehmer (14) in einem Automatisierungssystem (10), wobei die Netzwerkkomponente zumindest einen ersten, zweiten und dritten Ein- und Ausgangsport - im Folgenden: Port (28,30,32) - umfasst,
wobei über den ersten und zweiten Port (28,30) eine Verbindung zu anderen von dem Automatisierungssystem (10) umfassten Kommunikationsteilnehmern (14) nämlich zu anderen Netzwerkkomponenten (16,18,20,22,24,26), innerhalb einer hierarchisch gleichen Linie (36,38,40) besteht und
wobei über den dritten Port (32) eine Anbindung an andere Kommunikationsteilnehmer (14) nämlich an andere Netzwerkkomponenten (16-26), in einer hierarchisch untergeordneten Linie (38, 40) besteht,
wobei der Netzwerkkomponente (16-26) ein Alias (42) zugeordnet ist oder wird, welcher Aufschluss über eine hierarchische Position der Netzwerkkomponente (16-26) in dem Automatisierungssystem (10) gibt,
wobei in dem Automatisierungssystem (10) zwischen von dem Automatisierungssystem (10) umfassten Kommunikationsteilnehmern (14) versandte Telegramme (44) einen Zielkommunikationsteilnehmer (14) zumindest auch anhand dessen Alias (42) bezeichnen und
wobei beim Empfang eines Telegramms (44) ein eigener Alias (42) mit einem von dem empfangenen Telegramm (44) umfassten Alias eines Zielkommunikationsteilnehmers (14) - im Folgenden: Zielalias (52) - verglichen wird und in Abhängigkeit vom Ergebnis des Vergleichs das Telegramm (44) über den ersten, zweiten oder dritten Port (28-32) weitergeleitet wird.

2. Verfahren nach Anspruch 1,
wobei das Telegramm (44) über den ersten Port (28) weitergeleitet wird, wenn ein die eigene Ebene der Netzwerkkomponente(16-26) bezeichnender Bestandteil des eigenen Alias (42) - relevanter eigener Aliasabschnitt (50) - und ein entsprechenden Bestandteil des Zielalias (52) - relevanter Zielaliasabschnitt (54) - in dieser Reihenfolge einer "kleiner gleich" Relation genügen,
wobei das Telegramm (44) über den zweiten Port (30) weitergeleitet wird, wenn der relevante eigene Aliasabschnitt (50) und der relevante Zielaliasabschnitt (54) in dieser Reihenfolge einer "größer gleich" Relation genügen und
wobei das Telegramm (44) über den dritten Port (32) weitergeleitet wird, wenn der relevante eigene Aliasabschnitt (50) und der relevante Zielaliasabschnitt (54) einer "ist gleich" Relation genügen.

3. Verfahren nach Anspruch 2,
wobei ein über den ersten Port (28) empfangenes Telegramm (44) als Irrläufer zurückgewiesen wird, wenn der relevante eigene Aliasabschnitt (50) und der relevante Zielaliasabschnitt (54) in dieser Reihenfolge einer "kleiner gleich" Relation genügen und
wobei ein über den zweiten Port (30) empfangenes Telegramm (44) als Irrläufer zurückgewiesen wird, wenn der relevante eigene Aliasabschnitt (50) und der relevante Zielaliasabschnitt (54) in dieser Reihenfolge einer "größer gleich" Relation genügen.

4. Verfahren nach einem der Ansprüche 1 bis 3,
wobei die Netzwerkkomponente (16-26) ihre Zugehörigkeit zu dem Automatisierungssystem (10) einerseits und eine Verbindung mit einer nicht zu dem Automatisierungssystem (10) gehörenden Domäne (70) andererseits erkennt und einen diesbezüglichen Merker setzt,
wobei die Netzwerkkomponente (16-26) Kommunikation mit Kommunikationsteilnehmern (14) im Automatisierungssystem periodisch abwickelt, wobei jede Datenübertragungsperiode (74) in einen Abschnitt für zyklische Kommunikation - im Folgenden: zyklischer Bereich (76) - und einen Abschnitt für azyklische Kommunikation - im Folgenden: azyklischer Bereich - unterteilt ist und
wobei die Netzwerkkomponente (16-26) eine von der oder jeder nicht zum Automatisierungssystem (10) gehörenden Domäne (70) eingehende Kommunikation, derart verarbeitet, dass eingehende Telegramme der eingehenden Kommunikation - im Folgenden: Fremdtelegramme (72) in Telegramme (44) mit einer vorgegebenen oder vorgebbaren maximalen Länge aufgeteilt und eine sich so ergebende Folge von Telegrammen (44) während des azyklischen Bereichs (78) weitergeleitet werden.

5. Verfahren nach Anspruch 4,
wobei die sich durch Aufteilung eines Fremdtelegramms (72) ergebenden Telegramme (44) sukzessive in den azyklischen Bereichen (78) von aufeinander folgenden Datenübertragungsperioden (74) weitergeleitet werden.

6. Verfahren nach Anspruch 4 oder 5,
wobei die Netzwerkkomponente (16-26) die sich durch Aufteilung eines Fremdtelegramms (72) ergebenden Telegramme (44) jeweils um Adressdaten (80) ergänzt, wie sie vom ursprünglichen Fremdtelegramm (72) umfasst waren.

7. Verfahren nach einem der Ansprüche 5 oder 6,
wobei die Netzwerkkomponente (16-26) im Falle eines sukzessiven Empfangs einer Mehrzahl von aus einer Aufteilung eines Fremdtelegramms (72) herrührenden Telegramme (44) im azyklischen Bereich (78) von aufeinander folgenden Datenübertragungsperioden (74) diese zu einem Telegramm (44) unter zumindest einmaligem Erhalt der Adressdaten (80) kombiniert, wenn die zugrunde liegenden Telegramme (44) für eine nicht zum Automatisierungssystem (10) gehörenden Domäne (70) bestimmt sind.

8. Automatisierungssystem mit einer Mehrzahl von kommunikativ verbundenen Kommunikationsteilnehmern (14), **dadurch gekennzeichnet, dass** zumindest einer der Kommunikationsteilnehmer eine nach dem Verfahren nach einem der Ansprüche 1 bis 7 betreibbare Netzwerkkomponente (16-26) ist.

9. Automatisierungssystem nach Anspruch 8, wobei jedem Kommunikationsteilnehmer (14) ein eindeutiger Alias zugewiesen ist, der sich aus folgendem Bildungsschema ergibt:
a) ausgehend von einem zentralen Kommunikationsteilnehmer (14) wird für alle Kommunikationsteilnehmer (14), die mit dem zentralen Kommunikationsteilnehmer (14) in einer hierarchisch gleichen Linie (36) verbunden sind, ein eine erste Ebene der Kommunikationsverbindungen in dem Automatisierungssystem (10) bezeichnender Bestandteil des jeweiligen Alias dieses Kommunikationsteilnehmers, insbesondere einer Netzwerkkomponente (16-26), mit einem Abstand von zentralen Kommunikationsteilnehmer (14) erhöht;
b) für alle auf diese Weise erreichten Netzwerkkomponenten (16-26), mit denen über deren dritten Port (32) mittel- oder unmittelbar zumindest ein Kommunikationsteilnehmer (14) verbunden ist, wird für diesen Kommunikationsteilnehmer (14) ein Alias vergeben, der aus dem Alias der hierarchisch übergeordneten Netzwerkkomponente (16-26) durch Hinzufügung eines eine hierarchisch untergeordnete Ebene der Kommunikationsverbindungen in dem Automatisierungssystem (10) bezeichnenden Bestandteils gebildet wird;
c) für alle Netzwerkkomponenten (16-26), denen gemäß Schritt b) ein Alias zugewiesen wurde, werden die Schritte a) und b) wiederholt, wobei die jeweilige Netzwerkkomponente (16-26) an die Stelle des zentralen Kommunikationsteilnehmers (14) und die jeweilige hierarchische Ebene an die Stelle der ersten Ebene der Kommunikationsverbindungen tritt.

10. Verfahren zur Datenübermittlung in einem Automatisierungssystem mit Kommunikationsteilnehmern (14) von denen zumindest einzelne nach dem Verfahren nach einem der Ansprüche 1 bis 7 als Netzwerkkomponente betrieben werden,
wobei jede Netzwerkkomponente (16-26) zur Weiterleitung an einen jeweiligen Zielkommunikationsteilnehmer empfangene Telegramme (44) in Ansehung zumindest der eine eigene Ebene der Netzwerkkomponente (16-26) bezeichnenden Bestandteile des von jedem derartigen Telegramm (44) umfassten Alias (42) des Zielkommunikationsteilnehmers ordnet, daraus durch Aneinanderreihung von von den einzelnen Telegrammen (44) umfassten Nutzdaten - im Folgenden: Datenframes (60) - ein kompaktiertes Telegramm (58) bildet und dieses anstelle der empfangenen einzelnen Telegramme (44) weiterleitet.

11. Verfahren zur Datenübermittlung nach Anspruch 10,
wobei jeder Kommunikationsteilnehmer (14) im Zusammenhang mit einem Empfang eines kompaktierten Telegramms (58) darin für ihn bestimmte Datagramme (60) entnimmt und wobei das kompaktierte Telegramm (58) um das oder jedes entnommene Datagramm (60) verkürzt wird.

12. Verfahren nach Anspruch 10 und 11, wobei jedem Datagramm (60) in einem kompaktierten Telegramm (58) ein Prüfdatum (68) zugeordnet ist.

13. Computerprogramm mit durch einen Computer ausführbaren Programmcodeanweisungen zur Implementierung des Verfahrens nach einem der Ansprüche 1 bis 7 oder zur Implementierung des Verfahrens gemäß Anspruch 9 oder zur Implementierung des Verfahrens nach einem der Ansprüche 10 bis 12, wenn das Computerprogramm auf einem Computer ausgeführt wird.

14. Computerprogrammprodukt, insbesondere Speichermedium, mit einem durch einen Computer ausführbaren Computerprogramm gemäß Anspruch 13.

## Claims

1. Method for operating a network component as a communications subscriber (14) in an automation system (10), the network component comprising at least a first, second and third input and output port - in the following port (28, 30, 32),
wherein there is a connection to other communications subscribers (14) in the automation system (10), specifically to other network components (16, 18, 20, 22, 24, 26), within a hierarchically identical line (36, 38, 40) by way of the first and second ports (28, 30) and
wherein there is an interface with other communications subscribers (14), specifically with other network components (16-26), in a hierarchically lower-order line (38, 40) by way of the third port (32),
wherein an alias (42) is or will be assigned to the network component (16-26), providing information about a hierarchical position of the network component (16-26) in the automation system (10),
wherein telegrams (44) sent between communications subscribers (14) in the automation system (10) designate a destination communications subscriber (14) at least also based on its alias (42), and
wherein on receipt of a telegram (44) a specific alias (42) is compared with an alias of a destination communications subscriber (14) - in the following destination alias (52) - contained in the received telegram (44) and the telegram (44) is forwarded by way of the first, second or third port (28-32) as a function of the result of the comparison.

2. Method according to claim 1,
wherein the telegram (44) is forwarded by way of the first port (28), if a component of the specific alias (42) designating the specific level of the network component (16-26) - relevant specific alias segment (50) - and a corresponding component of the destination alias (52) - relevant destination alias segment (54) - in this sequence satisfy a "less than or equal to" relationship,
wherein the telegram (44) is forwarded by way of the second port (30), if the relevant specific alias segment (50) and the relevant destination alias segment (54) in this sequence satisfy a "greater than or equal to" relationship and wherein the telegram (44) is forwarded by way of the third port (32), if the relevant specific alias segment (50) and the relevant destination alias segment (54) satisfy an "equal to" relationship.

3. Method according to claim 2,
wherein a telegram (44) received by way of the first port (28) is rejected as misdirected, if the relevant specific alias segment (50) and the relevant destination alias segment (54) in this sequence satisfy a "less than or equal to" relationship and
wherein a telegram (44) received by way of the second port (30) is rejected as misdirected, if the relevant specific alias segment (50) and the relevant destination alias segment (54) in this sequence satisfy a "greater than or equal to" relationship.

4. Method according to one of claims 1 to 3,
wherein the network component (16-26) recognizes its association with the automation system (10) on the one hand and a connection to a domain (70) not belonging to the automation system (10) on the other hand, and sets an associated flag,
wherein the network component (16-26) handles communication with communications subscribers (14) in the automation system periodically, with each data transmission period (74) being subdivided into one segment for cyclical communication - in the following cyclical region (76) - and one segment for acyclical communication - in the following acyclical region - and
wherein the network component (16-26) processes an incoming communication from the or each domain (70) not belonging to the automation system (10) in such a manner that incoming telegrams of the incoming communication - in the following external telegrams (72) - are divided into telegrams (44) with a predetermined or predeterminable maximum length and a series of telegrams (44) thus resulting is forwarded in the course of the acyclical region (78).

5. Method according to claim 4,
wherein the telegrams (44) resulting from division of an external telegram (72) are forwarded successively in the acyclical regions (78) of data transmission periods (74) following one another.

6. Method according to claim 4 or 5,
wherein the network component (16-26) supplements the telegrams (44) resulting from division of an external telegram (72) respectively with address data (80) as included in the original external telegram (72).

7. Method according to one of claims 5 or 6,
wherein in the event of successive receipt of a number of telegrams (44) originating from a division of an external telegram (72) in the acyclical region (78) of data transmission periods (74) following one another, the network component (16-26) combines these into one telegram (44) retaining the address data (80) at least once, when the underlying telegrams (44) are intended for a domain (70) that does not belong to the automation system (10).

8. Automation system with a number of communications subscribers (14) connected for communications purposes, **characterised in that** at least one of the communications subscribers is a network component (16-26) that can be operated according to the method according to one of claims 1 to 7.

9. Automation system according to claim 8, wherein a unique alias is allocated to each communications subscriber (14), resulting from the following formation system:
a) starting from a central communications subscriber (14) for all communications subscribers (14), which are connected to the central communications subscriber (14) in a hierarchically identical line (36), a component of the respective alias of this communications subscriber, in particular of a network component (16-26), designating a first level of communications connections in the automation system (10) is increased with distance from the central communications subscriber (14);
b) for all network components (16-26) reached in this manner, to which at least one communications subscriber (14) is connected indirectly or directly by way of its third port (32), an alias is allocated to said communications subscriber (14), which is formed from the alias of the hierarchically higher-order network component (16-26) by adding a component designating a hierarchically lower-order level of communications connections in the automation system (10);
c) steps a) and b) are repeated for all network components (16-26), to which an alias was allocated according to step b), with the respective network component (16-26) taking the place of the central communications subscriber (14) and the respective hierarchical level taking the place of the first level of communications connections.

10. Method for transmitting data in an automation system with communications subscribers (14), of which at least individual ones are operated as a network component according to the method according to one of claims 1 to 7,
wherein each network component (16-26) orders telegrams (44), which it has received for forwarding to a respective destination communications subscriber, taking into consideration at least the components of the alias (42) of the destination communications subscriber included in each such telegram (44) designating a specific level of the network component (16-26), forms a compacted telegram (58) therefrom by lining up payload - in the following data frames (60) - included in the individual telegrams (44) and forwards this instead of the received individual telegrams (44).

11. Method for transmitting data according to claim 10,
wherein in conjunction with receipt of a compacted telegram (58) each communications subscriber (14) extracts datagrams (60) intended for it and wherein the compacted telegram (58) is shorted by the or each extracted datagram (60).

12. Method according to claim 10 and 11, wherein check data (68) is assigned to each datagram (60) in a compacted telegram (58).

13. Computer program with program code instructions that can be executed by a computer to implement the method according to one of claims 1 to 7 or to implement the method according to claim 9 or to implement the method according to one of claims 10 to 12 when the computer program is executed on a computer.

14. Computer program product, in particular a storage medium, with a computer program according to claim 13 that can be executed by a computer.

## Revendications

1. Procédé pour faire fonctionner un composant de réseau comme participant ( 14 ) à une communication dans un système ( 10 ) d'automatisation, les composants de réseau comprenant au moins un premier, deuxième et troisième accès d'entrée et de sortie - dans ce qui suit : accès ( 28, 30, 32 ),
dans lequel par le premier et le deuxième accès (28, 30 ), une liaison avec d'autres participants ( 14 ) à la communication englobés par le système ( 10 ) d'automatisation, à savoir avec d'autres composants ( 16, 18, 20, 22, 24, 26 ) du réseau, est constituée au sein d'une même ligne ( 36, 38, 40 ) hiérarchique et
dans lequel par le troisième accès ( 32 ) une liaison vers d'autres participants ( 14 ) à la communication, à savoir vers d'autres composants ( 16 à 26 ) du réseau, est constituée dans une ligne ( 38, 40 ) subordonnée hiérarchiquement,
dans lequel aux composants ( 16 à 26 ) du réseau est affecté un alias ( 42 ), qui donne une conclusion sur une position hiérarchique du composant ( 16 à 26 ) dans le système ( 10 ) d'automatisation,
dans lequel dans le système ( 10 ) d'automatisation, des télégrammes ( 44 ) envoyés entre des participants ( 14 ) à la communication englobés par le système ( 10 ) d'automatisation désignent un participant ( 14 ) à une communication destinataire, au moins aussi au moyen de son alias ( 42 ) et
dans lequel à la réception d'un télégramme ( 44 ), un alias ( 42 ) propre est comparé à un alias englobé par le télégramme ( 44 ) reçu d'un participant ( 14 ) à la communication destinataire - dans ce qui suit : alias ( 52 ) destinataire - et en fonction du résultat de la comparaison, le télégramme ( 44 ) est acheminé par le premier, deuxième ou troisième accès ( 28 à 32 ).

2. Procédé suivant la revendication 1,
dans lequel le télégramme ( 44 ) est acheminé par le premier accès ( 28 ) lorsqu'un constituant, désignant le plan propre du composant ( 16 à 26 ) du réseau, de l'alias ( 42 ) propre - section ( 50 ) d'alias propre pertinente - et un constituant correspondant de l'alias ( 52 ) destinataire - section ( 54 ) d'alias destinataire pertinente - satisfont dans cette succession à une relation "plus petite égale",
dans lequel le télégramme ( 44 ) est acheminé par le deuxième accès ( 30 ) lorsque la section ( 50 ) d'alias propre pertinente et la section ( 54 ) d'alias destinataire pertinente satisfont dans cet ordre à une relation "supérieure égale" et
dans lequel le télégramme ( 44 ) est acheminé par le troisième accès ( 32 ) lorsque la section ( 50 ) d'alias propre pertinente et la section ( 54 ) d'alias destinataire pertinente satisfont à une relation "est égale".

3. Procédé suivant la revendication 2,
dans lequel un télégramme ( 44 ) reçu par le premier accès ( 28 ) est rejeté comme en souffrance lorsque la section ( 50 ) d'alias propre pertinente et la section ( 54 ) d'alias destinataire pertinente satisfont dans cet ordre à une relation "supérieure égale".

4. Procédé suivant l'une des revendications 1 à 3,
dans lequel le composant ( 16 à 26 ) du réseau reconnaît son appartenance au système ( 10 ) d'automatisation, d'une part, et une liaison avec un domaine n'appartenant pas au système ( 10 ) d'automatisation, d'autre part et émet un indicateur à ce sujet,
dans lequel le constituant ( 16 à 26 ) du réseau fait se dérouler périodiquement une communication avec des participants ( 14 ) à la communication du système d'automatisation, chaque période ( 74 ) de transmission de données étant subdivisée en un segment pour une communication cyclique - dans ce qui suit : partie ( 76 ) cyclique - et en un segment pour une communication acyclique - dans ce qui suit : partie acyclique - et
dans lequel le composant ( 16 à 26 ) de réseau traite une communication entrant par le domaine ou par chaque domaine ( 70 ) n'appartenant pas au système ( 10 ) d'automatisation, de manière à ce que des télégrammes de la communication entrants - dans ce qui suit : télégrammes ( 72 ) extérieurs - soient subdivisés en des télégrammes ( 44 ) ayant une longueur maximum prescrite ou pouvant l'être et de manière à ce qu'une succession ainsi obtenue de télégrammes ( 44 ) soient acheminés pendent la partie ( 78 ) acyclique.

5. Procédé suivant la revendication 4,
dans lequel les télégrammes ( 44 ) provenant de la subdivision d'un télégramme ( 72 ) extérieur sont acheminés successivement dans les parties ( 78 ) acycliques de période ( 74 ) de transmission de données qui se succèdent.

6. Procédé suivant la revendication 4 ou 5,
dans lequel les composants ( 16 à 26 ) de réseau complètent les télégrammes ( 44 ) obtenus par subdivision d'un télégramme ( 72 ) extérieur, respectivement de données ( 80 ) d'adresse, telles qu'elles étaient comprises par le télégramme ( 72 ) extérieur d'origine.

7. Procédé suivant l'une des revendications 5 ou 6,
dans lequel les composants ( 16 à 26 ) de réseau combinent, en obtenant au moins une fois les données ( 80 ) d'adresse, dans le cas d'une réception successive d'une multiplicité de télégrammes ( 44 ) provenant d'une subdivision d'un télégramme ( 72 ) extérieur, dans la partie ( 78 ) acyclique de période ( 74 ) de transmission de données qui se succèdent, ceux-ci en un télégramme ( 44 ), lorsque les télégrammes ( 44 ) de base sont destinés à un domaine ( 70 ) n'appartenant au système ( 10 ) d'automatisation.

8. Système d'automatisation, comprenant une multiplicité de participants ( 14 ) à la communication reliée en communication, **caractérisé en ce qu'**au moins l'un des participants à la communication est un composant ( 16 à 26 ) du réseau pouvant fonctionner par le procédé suivant l'une des revendications 1 à 7.

9. Système d'automatisation suivant la revendication 8, dans lequel il est affecté à chaque participant ( 14 ) à une communication, un alias univoque, qui est obtenu dans le schéma de formation suivant .
a) à partir d'un participant ( 14 ) central à la communication, il est augmenté d'une distance au participant ( 14 ) central à la communication, pour tous les participants ( 14 ) à la communication, qui sont reliés au participant ( 14 ) central à la communication suivant une même ligne ( 36 ) hiérarchiquement, un constituant, désignant un premier plan de liaison de communication dans le système ( 10 ) d'automatisation, de l'alias respectif de ce participant à la communication, notamment d'un composant ( 16 à 26 ) de réseau ;
b) pour tous les composants ( 16 à 26 ) de réseau atteints de cette façon, avec lesquels par son troisième accès ( 32 ), un participant ( 14 ) à la communication est relié indirectement ou directement, il est prescrit pour ce participant ( 14 ) à la communication un alias, qui est formé de l'alias du composant ( 16 à 26 ) de réseau supérieur hiérarchiquement par addition d'un constituant désignant un plan subordonné hiérarchiquement des liaisons de communication dans le système ( 10 ) d'automatisation ;
c) pour tous les composants ( 16 à 26 ) du réseau, auxquels il a été affecté un alias suivant le stade b), les stades a) et b) sont répétés, le composant ( 16 à 26 ) respectif du réseau entrant à la place du participant ( 14 ) central à la communication et le plan hiérarchique respectif à la place du premier plan des liaisons de communication.

10. Procédé de transmission de données dans un système d'automatisation, comprenant des participants ( 14 ) à la communication dont au moins certains fonctionnent par le procédé suivant l'une des revendications 1 à 7, comme composant de réseau,
dans lequel chaque composant ( 16 à 26 ) de réseau ordonne, pour l'acheminement de télégrammes ( 44 ) reçus vers un participant respectif à la communication destinataire, au vue d'au moins les constituants, désignant un plan propre du composant ( 16 à 26 ) du réseau, de l'alias ( 42 ), compris par chaque télégramme ( 44 ) de ce genre, du participant à la communication destinataire, en forme en rangeant des données utiles comprises par les télégrammes ( 44 ) individuels - dans ce qui suit : trames ( 60 ) de données - un télégramme ( 58 ) compacté et l'achemine, au lieu des télégrammes ( 44 ) individuels reçus.

11. Procédé de transmission de données suivant la revendication 10,
dans lequel chaque participant ( 14 ) à la communication, en relation avec une réception d'un télégramme ( 68 ) compacté, y prélève des datagrammes ( 60 ) qui lui sont destinés et raccourcit le télégramme ( 58 ) compacté du ou de chaque datagramme ( 60 ) prélevé.

12. Procédé suivant la revendication 10 et 11, dans lequel une donnée ( 68 ) de vérification est affectée à chaque datagramme ( 60 ) d'un télégramme ( 58 ) compacté.

13. Programme informatique, comprenant des instructions de code de programme pouvant être réalisées par un ordinateur pour la mise en oeuvre du procédé suivant l'une des revendications 1 à 7 ou pour la mise en oeuvre du procédé suivant la revendication 9 ou pour la mise en oeuvre du procédé suivant l'une des revendications 10 à 12, lorsque le programme informatique est réalisé sur un ordinateur.

14. Produit de programme informatique, notamment support de mémoire, comprenant un programme informatique pouvant être réalisé par un ordinateur suivant la revendication 13.
